# EUROPÄISCHE PATENTSCHRIFT

(11) **EP 4 548 065 B1**
(45) Veröffentlichungstag und Bekanntmachung des Hinweises auf die Patenterteilung: **11.06.2025**
(21) Anmeldenummer: 24719040.8
(22) Anmeldetag: 13.03.2024
(51) Int. Cl.: G01M 17/007, B66F 7/00

(54) **FAHRZEUGTRÄGER FÜR EINEN PRÜFSTAND UND VERFAHREN ZUR RÜSTUNG EINES PRÜFSTANDES MIT EINEM DERARTIGEN FAHRZEUGTRÄGER**
VEHICLE SUPPORT FOR A TEST STAND, AND METHOD FOR SETTING UP A TEST STAND WITH SUCH A VEHICLE SUPPORT
SUPPORT DE VÉHICULE POUR BANC D'ESSAI ET PROCÉDÉ D'INSTALLATION D'UN BANC D'ESSAI AVEC UN TEL SUPPORT DE VÉHICULE

(30) Priorität: 14.03.2023 AT 501962023
(43) Veröffentlichungstag der Anmeldung: 07.05.2025
(73) Patentinhaber: AVL List GmbH, 8020 Graz (AT)
(72) Erfinder: SEEWALD, Georg, 8054 Graz (AT); GERSPACH, Urs, 8043 Graz (AT); FISCHER, Jörg, 72574 Bad Urach (DE); ZIMMERMANN, Tobias, 83623 Dietramszell (DE); MAUTHNER, Wolfgang, 8580 Köflach (AT)
(86) Internationale Anmeldenummer: PCT/AT2024/060088
(87) Internationale Veröffentlichungsnummer: WO 2024/187207

(56) Entgegenhaltungen:
- WO-A1-2021/068019
- DE-A1- 102011 120 170

## Beschreibung

Die Erfindung betrifft einen Fahrzeugträger für einen Prüfstand, insbesondere für einen Antriebsstrangprüfstand oder einen Fahrzeugprüfstand sowie ein Verfahren zur Rüstung eines Prüfstandes mit einem solchen Fahrzeugträger.

Antriebsstrangprüfstände und Fahrzeugprüfstände weisen üblicherweise eine Vorrichtung zur Erzeugung einer Last, insbesondere eines Antriebs-, Dreh- oder Belastungsmomentes, auf, welche dann über eine Adaptervorrichtung auf eine Nabe eines Kraftfahrzeugs zu übertragen wird. Diese Adaptervorrichtungen werden üblicherweise zunächst an der Nabe des Kraftfahrzeugs befestigt, welches entsprechend zunächst korrekt zur Prüfvorrichtung platziert werden muss. Da hier eine korrekte Positionierung der Nabe des Fahrzeugs zur Prüfvorrichtung in allen drei Raumachsen notwendig ist, gestaltet sich dies häufig schwierig, zumal das Fahrzeug nach dem Aufsetzen der Adaptervorrichtungen nicht mehr fahrbar ist.

Es sind daher Fahrzeugträger bekannt geworden, mit denen ein Fahrzeug außerhalb des Prüfstandes zunächst vorbereitet werden kann, insbesondere beispielsweise die Räder von den Achsen entfernt werden können und anschließend zum Prüfstand verbracht werden kann, wo die Achsen des Fahrzeugs mit den entsprechenden Adaptervorrichtungen des Prüfstandes verbunden werden können. Auf diese Weise wird die Rüstzeit und Abrüstzeit am Prüfstand und somit dessen Nutzungsdauer für ein Fahrzeug verkürzt, wodurch Kosten eingespart werden.

Ein solcher Fahrzeugträger ist beispielsweise aus der DE 102011120170 A1 bekannt. Der Fahrzeugträger weist einen Rahmen auf, auf den das Fahrzeug aufgesetzt wird. Am Rahmen sind Rollen oder Reifen angeordnet, so dass das Fahrzeug auch ohne Räder verschoben und zum Prüfstand gebracht und dort in Achsrichtung zu den Adaptervorrichtungen des Prüfstandes ausgerichtet und mit diesen verbunden werden kann. Die Adaptervorrichtungen müssen manuell zu den Fahrzeugachsen angeordnet und am Boden befestigt werden, um korrekte Achsabstände und Spurweiten des Fahrzeugs berücksichtigen zu können.

Weiter offenbart die Patentschrift WO2021068019 A1 einen Prüfstand für ein Kraftfahrzeug mit Radwechselsystemen. Die Radwechselsysteme weisen jeweils eine Radwechselvorrichtung, eine Vorrichtung zum Antrieb der Radwechselvorrichtung und mindestens eine Kraftübertragungsvorrichtung auf. Eine mit den Radwechselsystemen verbundene Verfahreinrichtung dient dazu, das zu prüfenden Kraftfahrzeug in Längsrichtung und/oder in Querrichtung zu bewegen.

Zusätzlich ist aus der WO 2017/013173 A1 eine Prüfvorrichtung mit einer Lasteinrichtung bekannt, bei der eine Adaptervorrichtung an der Lasteinrichtung befestigt ist und über eine Schiene in Richtung der Fahrzeugachse verfahrbar ist. Das Fahrzeug wird hierzu am Prüfstand auf eine Hebebühne gehoben, wo die Verbindung der Adaptervorrichtung mit den Radnaben des Fahrzeugs hergestellt werden kann. Anschließend kann das Fahrzeug über die Hebebühne auch in Höhenrichtung zur Lasteinrichtung ausgerichtet werden. Problematisch ist jedoch, sowohl die korrekte Ausrichtung des Fahrzeugs in Fahrtrichtung als auch die Anordnung des Fahrzeugs auf der Hebebühne, da dieses in einem Notfall nicht in kurzer Zeit vom Prüfstand entfernt werden kann. Des Weiteren muss die gesamte Rüstung des Fahrzeugs am Prüfstand stattfinden, so dass lange Verweilzeiten am Prüfstand entstehen, ohne dass ein Testlauf stattfindet. Dies mindert die mögliche Auslastung des Prüfstandes und erhöht somit die Kosten.

Es stellt sich daher die Aufgabe, einen Fahrzeugträger für einen Prüfstand sowie ein Verfahren zur Rüstung eines Prüfstandes mit einem derartigen Fahrzeugträger bereit zu stellen, mit denen die Rüstzeit und die Abrüstzeit am Prüfstand verkürzt werden können und eine Vereinfachung der Anbindung des zu prüfenden Fahrzeugs an die Lastvorrichtung ermöglicht wird. Dabei sollen insbesondere die effektiven Nutzungszeiten des Prüfstandes erhöht werden und der Fahrzeugträger bezüglich seiner Maße an die Maße des Fahrzeugs angepasst werden können.

Diese Aufgabe wird durch einen Fahrzeugträger mit den Merkmalen des Anspruchs 1 gelöst.

Der erfindungsgemäße Fahrzeugträger für einen Prüfstand weist zwei Längsträger auf, die über einen vorderen Querträger und einen hinteren Querträger miteinander verbunden sind. Dabei können die Querträger entweder zu den Längsträgern verschiebbar sein oder fest an diesen angebracht werden. Der hintere und der vordere Querträger erstrecken sich zwischen den Längsträgern. An beiden Seiten erstreckt sich in Höhe der beiden Querträger an der anderen Seite der Längsträger jeweils ein Lagerabschnitt, der entweder mit dem Längsträger oder mit dem Querträger verbunden sein kann. Die beiden Längsträger sind entsprechend zwischen den Lagerabschnitten angeordnet. An jedem der Lagerabschnitte ist jeweils ein Tragelement befestigt. Diese Befestigung kann indirekt oder direkt erfolgen und auch eine geführte Bewegung zwischen dem Tragelement und den Lagerabschnitten ermöglichen. Zumindest an den beiden Tragelementen, die an den vom vorderen Querträger abgewandten Seiten der Längsträger angeordnet sind, sind Rollen angeordnet, über die der Fahrzeugträger verschiebbar ist und die entsprechend auf dem Boden aufliegen. Des Weiteren sind auf den Tragelementen Adaptervorrichtungen befestigt, an denen Radnaben eines Fahrzeugs befestigbar sind. Diese Adaptervorrichtungen wiesen eine drehbare Aufnahme auf, die beispielsweise mit einer Lasteinrichtung verbunden werden kann. Durch die direkt an den Tragelementen befestigten Adaptervorrichtungen kann die Aufbereitung des Fahrzeugs in Entfernung vom Prüfstand, beispielsweise an einem Rüstplatz vorgenommen werden. Das Fahrzeug kann dann über eine Hebebühne angehoben und vertikal zu den Adaptervorrichtungen ausgerichtet werden, woraufhin die Räder entfernt und die Radachsen bereits am Rüstplatz mit den Adaptervorrichtungen verbunden werden können. Anschließend kann das so vorbereitete Fahrzeug abgelassen und mit dem verschiebbaren Fahrzeugträger über die Rollen bewegt und am Prüfstand positioniert werden. So wird die Rüstzeit auf die Anbindung zur Lasteinrichtung am Prüfstand reduziert, da lediglich die Verbindung der Adaptervorrichtungen zur Lasteinrichtung am Prüfstand durchgeführt werden muss. Auch wird die Nutzungszeit des Prüfstandes verbessert. Des Weiteren kann das Fahrzeug im Notfall in sehr kurzer Zeit mit dem Fahrzeugträger vom Prüfstand entfernt werden, wofür lediglich die Verbindung zwischen der Lasteinrichtung und den Adaptervorrichtungen gelöst werden muss.

Vorzugsweise sind die Tragelemente mit den Adaptervorrichtungen zu den Längsträgern verschwenkbar. Durch diese Schwenkbewegung kann ein Abstand zwischen den Adaptervorrichtungen entsprechend zur Spurweite des Fahrzeugs eingestellt werden.

In einer hierzu weiterführenden Ausführung sind die Tragelemente mit den Adaptervorrichtungen in einer Horizontalebene derart zu den Längsträgern verschwenkbar, dass eine Drehachse einer drehbaren Aufnahme der Adaptervorrichtungen, die mit der Radnabe des Fahrzeugs und an der entgegengesetzten Seite mit einer Antriebsachse der Lasteinrichtung verbindbar ist, in jeder Schwenkposition senkrecht zu einer Vertikalebene durch den benachbarten Längsträger angeordnet ist. Unter Horizontalebene wird in diesem Zusammenhang eine Ebene verstanden, welche parallel zur Oberfläche angeordnet ist, auf der der Fahrzeugträger steht, während die Vertikalebene durch den Längsträger senkrecht zu dieser Horizontaleben angeordnet ist und entlang der Erstreckungsrichtung der Längsträger verläuft. Daraus folgt, dass für alle einzustellenden Spurweiten immer eine korrekte Ausrichtung der Drehachse der Adaptervorrichtungen zu der Fahrzeugachse vorliegt. Auf diese Weise werden Spannungen im Fahrwerk durch die Befestigung vermieden. Auf eine zusätzliche Ausrichtung der Adaptervorrichtungen bezüglich des Winkels zu den Längsträgern ist entsprechend nicht erforderlich.

Besonders bevorzugt ist es, wenn die Verschwenkung über ein Parallelarmsystem erfolgt, über welches die Lagerabschnitte mit den Tragelementen verbunden sind. Dieses Parallelarmsystem ermöglicht die Einstellung zu der Spurweite des Fahrzeugs, wobei diese Einstellung aufgrund der Schwenkbewegung vor der Befestigung des Fahrzeugs erfolgt. Zwischen den Längsträgern und den Tragelementen bleibt auf diese Weise ein gewisser Freiheitsgrad vorhanden, durch den ein Verspannen der Fahrzeugachsen zueinander insbesondere während des Verfahrens des Fahrzeugträgers verhindert wird und dennoch eine ausreichende Befestigung des Fahrzeugs erreicht wird, so dass das Fahrzeug auch während des Testlaufs auf dem Fahrzeugträger verbleiben kann.

In einer hierzu weiterführenden Ausbildung der Erfindung besteht jedes Parallelarmsystem aus zwei parallel zueinander ausgerichteten, gleich langen Schubstangen, wobei an den entgegengesetzten Enden der Schubstangen jeweils ein Lagerauge ausgebildet ist, mit dem die Schubstange an ihrem einen Ende am Tragelement gelagert ist und mit ihrem entgegengesetzten Ende am Lagerabschnitt gelagert ist, wobei die Abstände und der Winkelversatz der Lageraugen zu den Längsträgern am Tragelement dem Winkelversatz und den Abständen der Lageraugen zu den Längsträgern am Lagerabschnitt entspricht. Auf diese Weise wird die korrekte Ausrichtung der Drehachse der Adaptervorrichtungen zur Fahrzeugachse auf einfache Weise sichergestellt.

Des Weiteren ist es vorteilhaft, wenn die Adaptervorrichtungen auf den Tragelementen über Nivellierschrauben zur Fahrzeugachse ausrichtbar sind. Fertigungstoleranzen oder Verformungen, die im Laufe der Zeit entstehen können, können über die Nivellierschrauben am Rüstplatz oder final am Prüfstand ausgeglichen werden, um eine horizontale Ausrichtung der Drehachsen der Adaptervorrichtungen und eine freie Bewegung des Fahrzeugs am Prüfstand zu gewährleisten. Durch korrekte Einstellung der Nivellierschrauben kann eine Verspannung der Fahrzeugachsen beziehungsweise des Fahrwerks zu den Adaptervorrichtungen zuverlässig verhindert werden. Auch kann eine solche Nachstellung noch nach der Befestigung der Radnaben an den Adaptervorrichtungen durchgeführt werden, um Schäden am Fahrzeug zu verhindern.

Des Weiteren sind die Adaptervorrichtungen auf den Tragelementen vorteilhafterweise begrenzt verschiebbar angeordnet und über eine Fixiervorrichtung arretierbar, so dass ein Verrutschen der Adaptervorrichtungen mit dem Fahrzeug auf den Tragelementen während des Verschiebens des Fahrzeugträgers verhindert wird. Durch die begrenzte Verschiebbarkeit der Adaptervorrichtungen auf den Tragelementen können Fertigungstoleranzen ausgeglichen werden und während des Testlaufs Spannungen am Fahrzeug vermieden werden.

Die Begrenzung der Verschiebbarkeit wird vorzugsweise durch Anschlagelemente am Tragelement gebildet, welche zumindest teilweise ein Dämpfungselement aufweisen. So können Schläge am Fahrwerk während der Tests verhindert werden, da diese durch das Dämpfungselement abgefedert werden.

Die Arretierung der Adaptervorrichtungen auf den Tragelementen erfolgt in einer bevorzugten Ausbildung durch Klemmen. Dies ist durch einfache Arretierhebel zu verwirklichen, so dass ein Verrutschen des Fahrzeugs während des Transports mit minimalem Aufwand zu verhindern ist.

Zusätzlich weisen die Adaptervorrichtungen vorzugsweise jeweils eine untere Lagerplatte auf, an der Kugelrollen befestigt sind, mit denen die Lagerplatte auf dem jeweiligen Tragelement aufliegt. Somit sind während des Prüfvorgangs geringfügige Bewegungen der Adaptervorrichtung auf der Tragplatte in zwei Achsrichtungen möglich. Dies erleichtert auch den Anschluss der Adaptervorrichtung an die Lasteinrichtung, da geringe Korrekturen der Achsen zueinander einfach vorgenommen werden können.

Des Weiteren ist es vorteilhaft, wenn die Tragelemente austauschbar sind. Dies ermöglicht eine Anpassung der Höhe der Radaufnahme an die Achshöhe des Fahrzeugs, in dem die Tragelemente unterschiedliche Höhen aufweisen.

Um auch eine korrekte Einstellung der Adaptervorrichtungen am Fahrzeugträger zum Achsabstand des Fahrzeugs vornehmen zu können, ist der Abstand des vorderen Querträgers mit den Tragelementen zum hinteren Querträger mit den Tragelementen veränderbar ist.

Diese Einstellung des Achsabstands ist besonders einfach durchzuführen, wenn die beiden Längsträger teleskopartig zwischen den beiden Querträgern ineinander und auseinander fahrbar sind. Hierzu können die beiden Längsträger jeweils eine äußere Hohlschiene und eine innere Schiene aufweisen, die in der äußeren Hohlschiene verschiebbar ist. In diesem Fall besteht somit zu vier Seiten ein Formschluss, der lediglich den Freiheitsgrad des Ein- und Ausfahrens in horizontaler Richtung freilässt. Sobald die Schiene so weit in die Hohlschiene ausgefahren ist oder eingefahren ist, dass eine korrekte Ausrichtung der Tragelemente zu den Fahrzeugachsen vorliegt, kann das Fahrzeug entsprechend abgelassen werden und an den Tragelementen befestigt oder auf diesen aufgesetzt werden. Bei einer derartigen Ausführung ist einer der Querträger beispielsweise an den beiden äußeren Hohlschienen der Längsträger befestigt, während der zweite Querträger an den beiden inneren Schienen befestigt oder auf diesen verschiebbar ist. Somit kann auf einfache Weise der Abstand der Tragelemente in Erstreckungsrichtung des Fahrzeugs korrekt zum Achsabstand des Fahrzeugs eingestellt werden.

Vorzugsweise sind auch an den Tragelementen des hinteren Querträgers Rollen ausgebildet. Diese dienen zu einer teilweisen Kraftaufnahme beim Verschieben des Fahrzeugträgers und ermöglichen ein Verschieben des Fahrzeugträgers auf dem Boden und somit eine Ausrichtung des Fahrzeugs mit dem Fahrzeugträger zur Hebebühne oder zur Lasteinrichtung.

Die Rollen sind vorzugsweise an dem vom Parallelarmsystem entfernten Ende der Tragelemente angeordnet, wodurch eine Zugänglichkeit der Rollen auch nach dem Aufsetzen des Fahrzeugs erhalten bleibt.

In einer bevorzugten Ausführungsform ist zumindest einer der Querträger auf den Längsträgern verschiebbar und in seiner Endposition fixierbar. So erfolgt eine zusätzliche Möglichkeit der Einstellung der Tragelemente entsprechend zum Achsabstand des Fahrzeugs.

Eine zusätzliche Möglichkeit der Abstandseinstellung der Tragelemente in Erstreckungsrichtung der Längsträger und somit zum Achsabstand des Fahrzeugs wird erreicht, indem der vordere Querträger in zwei um 180° um eine Vertikalachse gedrehten Positionen auf die Längsträger aufschiebbar ist, so dass die Tragelemente in der ersten Position vom hinteren Querträger wegweisen und in der zweiten Position zum hinteren Querträger weisen. Eine solche Einstellung ermöglicht die Einstellung des Achsabstands auf besonders kleine Abstände.

In einer bevorzugten Ausführungsform ist an der zum vorderen Querträger entgegengesetzten Seite des hinteren Querträgers eine Gabelaufnahme zwischen den beiden Längsträgern ausgebildet. Die Gabelaufnahme ermöglicht ein Einfahren eines Gabelfahrzeugs, wie einer sogenannten Ameise, unter den Fahrzeugträger, so dass dieser mittels des Gabelfahrzeugs verschoben werden kann. Bei dieser Verschiebung ist der Fahrzeugträger über die Räder des Gabelfahrzeugs und die Rollen am vorderen Querträger zum Boden gelagert. Um den Fahrzeugträger zur Verschiebung mittels des Gabelfahrzeugs an der hinteren Seite leicht anheben zu können und somit über das Gabelfahrzeug verfahrbar zu machen, kann die Gabelaufnahme über eine Drehachse zwischen den Längsträgern befestigt werden. So wird der Fahrzeugträger über die Drehachse angehoben, während die Gabelaufnahme durch die dann erforderliche Drehung um die Drehachse in der waagerechten verbleiben kann. Die Drehachse kann hierzu vorteilhafterweise an einem vom hinteren Querträger entfernten Bereich der Gabelaufnahme angeordnet werden, wodurch der Hauptkraftaufnahmepunkt möglichst nah am Schwerpunkt des Gabelfahrzeugs angeordnet ist. Des Weiteren kann am hinteren Querträger oder an einer Innenseite der Längsträger ein Anschlag für die Gabelaufnahme ausgebildet sein, über den die Drehung der Gabelaufnahme um die Drehachse eingeschränkt ist. Hierdurch wird verhindert, dass der Fahrzeugträger so weit angehoben wird und damit die Gabelaufnahme an ihrem von der Drehachse entfernten Bereich so weit in Richtung des Fahrzeugunterbodens gedreht wird, dass die Gabelaufnahme die Fahrzeugunterseite berührt, was an dieser zu Beschädigungen führen könnte.

Die Aufgabe wird auch durch ein Verfahren zur Rüstung eines Prüfstandes mit einem derartigen Fahrzeugträger gelöst, zunächst ein Fahrzeug über eine fest installierte Hebebühne angehoben wird, und daraufhin der Fahrzeugträger unter dem Fahrzeug platziert wird. Anschließend erfolgt eine Einstellung des Fahrzeugträgers korrespondierend zur Spurweite und zum Achsabstand des Fahrzeugs und zwar bezüglich der Spurweite des Fahrzeugs durch Drehen der Tragelemente über das Parallelarmsystem und bezüglich des Achsabstandes des Fahrzeugs durch Veränderung des Abstands des vorderen Querträgers mit den Tragelementen zum hinteren Querträger mit den Tragelementen. Dies kann durch Ein- oder Ausfahren der Teleskopschienen oder durch Bewegung oder Drehung des vorderen Querträgers auf dem Längsträger erfolgen. Daraufhin oder zuvor wird das Fahrzeug mittels der Hebebühne auf die entsprechende Höhe zu den Adaptervorrichtungen abgelassen und die Adaptervorrichtungen auf die Radnaben des Fahrzeugs montiert, so dass das Fahrzeug nun vollständig von dem Fahrzeugträger aufgenommen wird und das Fahrzeug über die Hebebühne vollständig heruntergelassen werden kann. Nun kann der Fahrzeugträger mit dem Fahrzeug über ein Gabelfahrzeug zum Prüfstand gefahren wird, beispielsweise indem die Gabel des Gabelfahrzeugs unter die Gabelaufnahme gefahren wird und der Fahrzeugträger im hinteren Bereich leicht angehoben wird. Am Prüfstand wird das Fahrzeug zur Lasteinrichtung ausgerichtet und die Adaptervorrichtungen mit der Lasteinrichtung zur Prüfung verbunden. Nach Durchführen der Tests kann das Fahrzeug wieder vom Prüfstand zum Rüstplatz gefahren werden, wo es wieder zur Hebebühne gefahren und von den Adaptervorrichtungen und somit vom Fahrzeugträger gelöst werden kann. Durch dieses Verfahren werden die Taktzeiten am Prüfstand deutlich verringert, da fast die gesamte Rüstzeit nicht mehr am Prüfstand, sondern am hiervon getrennten Rüstplatz erfolgt.

Es wird somit ein Fahrzeugträger für einen Prüfstand sowie ein Verfahren zur Rüstung eines Prüfstandes mit einem solchen Fahrzeugträger bereitgestellt, mit denen die Rüstzeiten am Prüfstand deutlich verkürzt werden können, da eine einfache Verfahrbarkeit des vollständig vorgerüsteten Fahrzeugs hergestellt wird. Eine Anpassung des Fahrzeugträgers an das jeweils zu prüfende Fahrzeug ist sehr einfach und schnell sowohl bezüglich des Achsabstands als auch der Spurweite durchführbar. Zusätzlich kann erstmalig die Prüfung eines Fahrzeugs direkt auf einem Fahrzeugträger durchgeführt werden, mit dem das Fahrzeug im Notfall auch sehr schnell aus dem Prüfstand entfernt werden kann. Ein Entfernen des Fahrzeugs vom Fahrzeugträger ist entsprechend nicht mehr erforderlich.

Ein nicht einschränkendes Ausführungsbeispiel eines erfindungsgemäßen Fahrzeugträgers für einen Prüfstand wird im Folgenden ebenso wie das Verfahren zur Rüstung eines Prüfstandes mit einem solchen Fahrzeugträger anhand der Figuren beschrieben.
Figur 1 zeigt einen erfindungsgemäßen Fahrzeugträger in perspektivischer Darstellung
Figur 2 zeigt ein Tragelement des erfindungsgemäßen Fahrzeugs aus Figur 1 in perspektivischer Darstellung.
Figur 3 zeigt alternatives Tragelement des erfindungsgemäßen Fahrzeugs aus Figur 1 in perspektivischer Darstellung.
Figur 4 zeigt den Fahrzeugträger an der Hebebühne am Rüstplatz mit dem Fahrzeug und einem Gabelfahrzeug.
Figur 5 zeigt eine Frontansicht des Fahrzeugträgers mit Fahrzeug an einem Prüfstand.

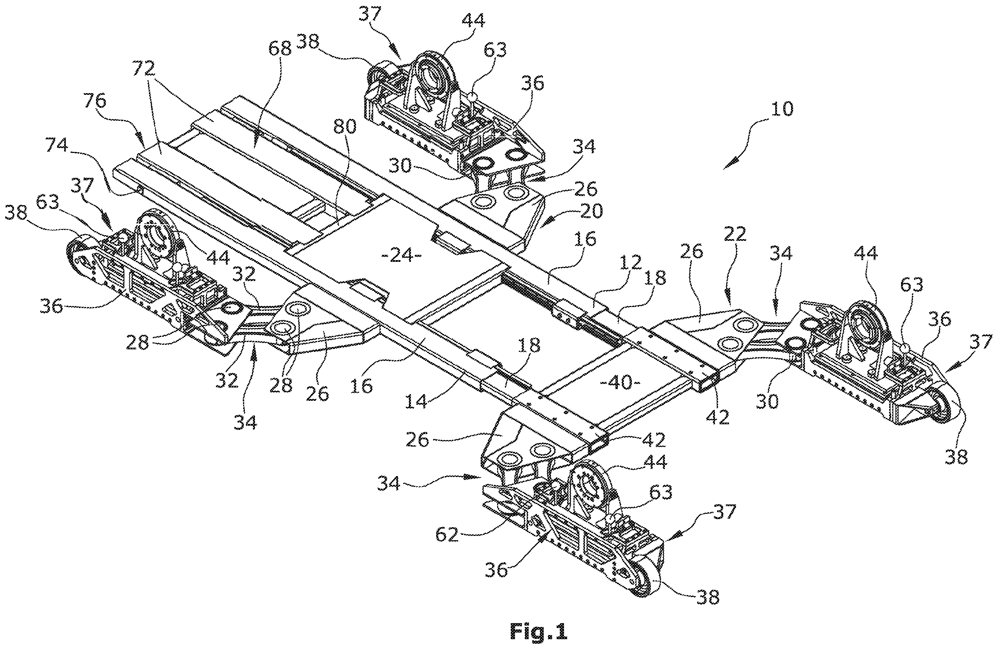

Der in der Figur 1 dargestellte erfindungsgemäße Fahrzeugträger 10 weist einen ersten Längsträger 12 und einen zweiten Längsträger 14 auf, welche parallel zueinander ausgerichtet sind und jeweils in einem hinteren Bereich eine äußere Hohlschiene 16 und im vorderen Bereich eine in der äußeren Hohlschiene 16 verschiebbare innere Schiene 18 aufweisen, wodurch die Länge der Längsträger 12, 14 variabel einstellbar ist. Die Begriffe "hinterer" oder "vorderer" beziehen sich auf eine übliche Bewegungsrichtung des Fahrzeugträgers 10 und dienen dem leichteren Verständnis, ohne einschränkend zu wirken.

Die beiden Längsträger 12, 14 sind im Bereich der äußeren Hohlschiene 16 durch einen hinteren Querträger 20 und im Bereich der inneren Schiene 18 durch einen vorderen Querträger 22 miteinander verbunden.

Der hintere Querträger 20 besteht aus drei Teilen, die an der äußeren Hohlschiene der Längsträger 12, 14 befestigt sind. Ein mittlerer Querträgerabschnitt 24 ist zwischen den beiden Längsträgern 12, 14 angeordnet und an diesen befestigt, während sich von den äußeren Seiten der beiden Längsträger 12, 14 Lagerabschnitte 26 senkrecht zu den Längsträgern 12, 14 erstrecken. Diese weisen an ihrer vom vorderen Querträger 22 abgewandten Seite zwei Lagerbolzen 28 zur gelagerten Aufnahme eines Lagerauges 30 einer Schubstange 32 auf. Die beiden Schubstangen 32 sind so angeordnet, dass sie ein Parallelarmsystem 34 bilden, wobei die Schubstangen 32 an ihren entgegengesetzten Enden ebenfalls ein Lagerauge 30 aufweisen, in welchen ein Lagerbolzen 28 ragt, der in einer entsprechenden Öffnung an einem zu dem hinteren Ende des Lagerabschnitts 26 gegenüberliegenden vorderen Ende eines Tragelementes 36 befestigt ist. Die Abstände und der Winkelversatz der Lagerbolzen 28 zu den Längsträgern 12, 14 am Tragelement 36 entspricht dem Winkelversatz und den Abständen der Lagerbolzen 28 zu den Längsträgern 12, 14 am Lagerabschnitt 26. Auch sind die beiden Schubstangen 32 gleich lang, so dass das Parallelarmsystem 34 gebildet wird, wodurch das Tragelement 36 um den Lagerabschnitt 26 drehbar ist, jedoch seine Winkellage bei der Drehung zu den Längsträgern 12, 14 erhalten bleibt.

Jeweils an einem vom Parallelarmsystem 34 abgewandten Ende 37 ist an den Tragelementen 36 des hinteren Querträgers 20 eine Rolle 38 befestigt, mit der der hintere Querträger 20 beidseits auf dem Boden aufliegt. Die Rollen 38 sind entsprechend zu einem hinteren Ende der Tragelemente 36 und des Fahrzeugträgers 10 gewandt.

Der vordere Querträger 22 besteht aus insgesamt fünf aneinander befestigten Teilen. Ein mittlerer Querträgerabschnitt 40 ist zwischen den beiden Längsträgern 12, 14 angeordnet und an beiden Seiten jeweils an einem Vierkantrohr 42 befestigt, welche auf die inneren Schienen 18 der beiden Längsträger 12, 14 aufgeschoben ist und entsprechend auf der inneren Schiene 18 gelagert ist, wozu der innere Querschnitt der Vierkantrohre 42 korrespondierend zum Außenquerschnitt der inneren Schienen 18 ausgeführt ist. An der nach außen weisenden Seite sind diese Vierkantrohre 42 auch am vorderen Querträger 22 jeweils mit einem Lagerabschnitt 26 verbunden, welche im Wesentlichen den Lagerabschnitten 26 des hinteren Querträgers 20 entsprechen, jedoch in umgekehrte Richtung weisen, so dass auch die über das bekannte Parallelarmsystem 34 an den Lagerabschnitten 26 befestigten Tragelemente 36 des vorderen Querträgers 22 in die andere Richtung, also nach vorne weisen. Auch die Lagerabschnitte 26 des vorderen Querträgers 22 erstrecken sich senkrecht zu den Längsträgern 12, 14 und sind über die zwei parallelen Schubstangen 32 mit den Lagerabschnitten verbunden. An den nach vorne weisenden Enden der Tragelemente 36 des vorderen Querträgers 22 sind ebenfalls Rollen 38 angebracht, die auf dem Boden aufliegen, so dass der Fahrzeugträger 12 über die vier Rollen 38 der hinteren und der vorderen Tragelemente 36 bewegbar ist.

Auf jedem der Tragelemente 3 ist eine Adaptervorrichtung 44 angeordnet. Diese wird mit einer Radnabe 46 eines Fahrzeugs 48 verbunden und dient als Zwischenstück zwischen einer Lasteinrichtung 50 zum Einbringen eines Momentes auf die Fahrzeugachsen 66 über die Radnaben 46.

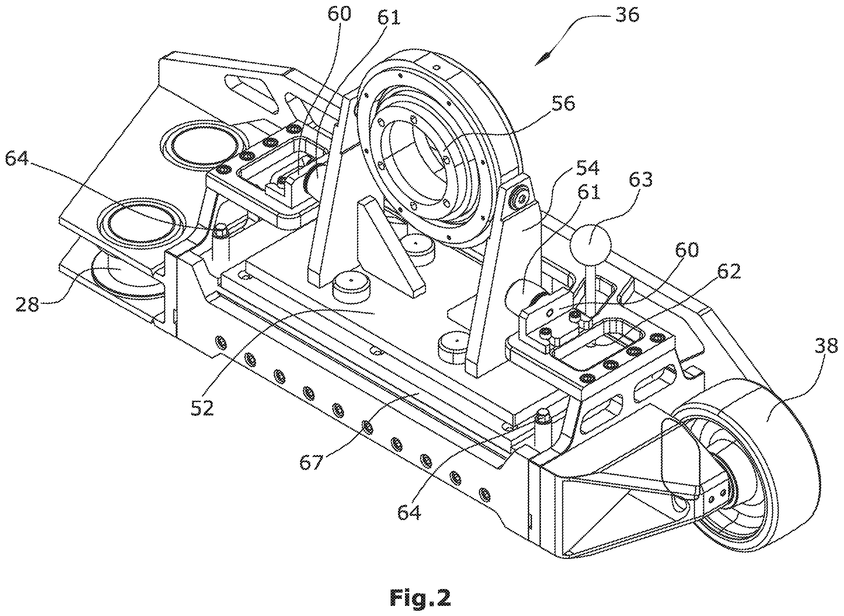

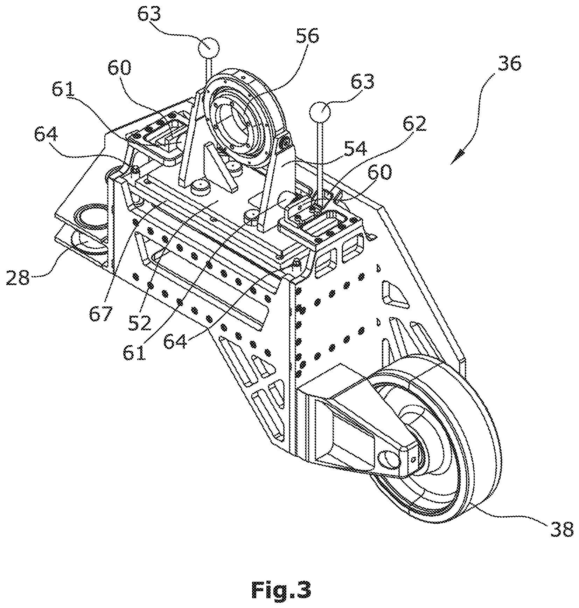

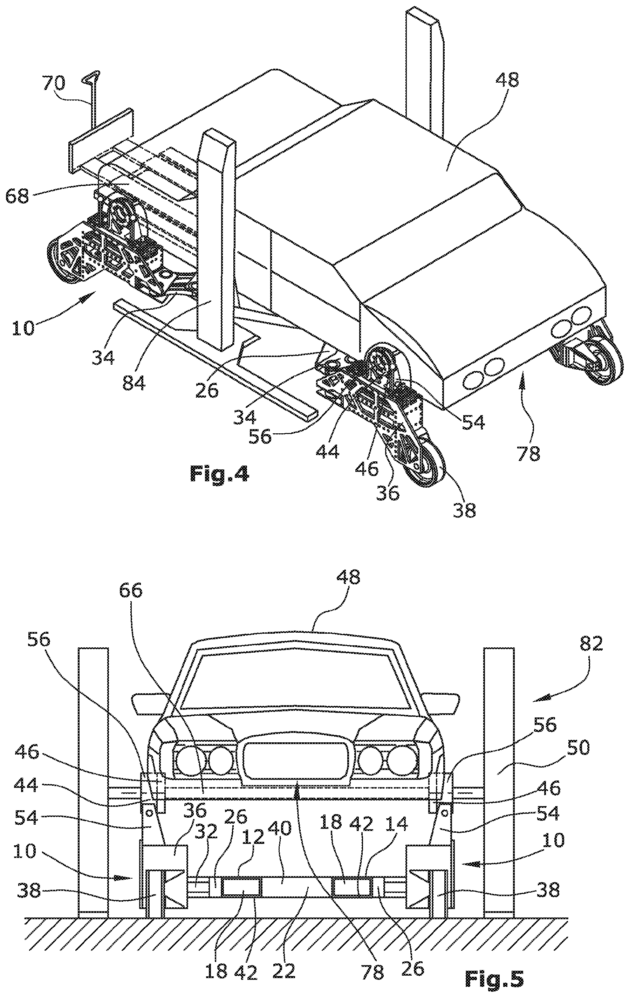

Diese Adaptervorrichtung 44 weist, wie in den Figuren 2 und 3 zu erkennen ist, eine untere Lagerplatte 52 auf, die einen Lagerbock 54 trägt, an dem eine drehbare Aufnahme 56 gelagert ist, die mit der Radnabe 46 des Fahrzeugs 48 und an der entgegengesetzten Seite mit einer Antriebsachse 58 der Lasteinrichtung 50 verbunden werden kann, wie dies in Figur 5 schematisch dargestellt ist.

An der unteren Seite der Lagerplatte 52, mit der die Adaptervorrichtung 44 auf dem Tragelement 36 aufgesetzt wird, sind mehrere in den Figuren nicht sichtbare Kugelrollen ausgebildet, die es ermöglichen, die Adaptervorrichtung 44 geringfügig auf den Tragelementen 36 zu verschieben. Auf diese Weise können innere Spannungen am Fahrwerk durch das Befestigen des Fahrzeugs 48 an den Adaptervorrichtungen 44 und somit am Fahrzeugträger 10 verhindert werden, da sich die Adaptervorrichtungen 44 zumindest geringfügig ausrichten können. Auch können so Spannungen während der Tests verhindert werden.

Die Bewegungsfreiheit wird durch Anschlagelemente 60 begrenzt, welche an den Tragelementen 36 ausgebildet sind. Die Anschlagelemente 60 umgeben die Lagerplatte 52 von drei Seiten und erstrecken sich vom Bereich vor der Lagerplatte 52 über den seitlichen, vom Längsträger 12, 14 abgewandten Bereich bis zum Bereich hinter der Lageplatte 52. Zusätzlich erstrecken sich die Anschlagelemente 60 auch über die Lagerplatte 52 in Richtung des Lagerbocks 54. An den zu den Lagerböcken 54 weisenden Enden ist jeweils ein Dämpfungselement angeordnet, gegen den die Adaptervorrichtung 44 bei zu weiter Verschiebung anschlägt. Dieser Anschlag wird entsprechend gedämpft, so dass Erschütterungen vermieden werden. Durch den sich um die Adaptervorrichtung 44 erstreckenden Bereich der Anschlagelemente 60 wird eine Verschiebung zu weite Verschiebung der Adaptervorrichtungen nach außen vermieden, während durch die Dämpfungselemente 61 eine axiale Verschiebung auf den Tragelementen 36 eingegrenzt wird. Durch den Abstand zu den Anschlagelementen 61 ist auch eine leichte Drehung auf den Tragelementen 36 möglich.

Zusätzlich sind im Bereich der Anschlagelemente 60 Fixiervorrichtungen 62 ausgebildet, die über Arettierhebel 63 betätigt werden können und mittels derer eine Fixierung der Lagerplatte 52 und damit der Adaptervorrichtung 44 erzeugt werden kann, um zu vermeiden, dass die Adaptervorrichtungen 44 sich während des Verfahrens mit dem Fahrzeug 48 vom Fahrzeugträger 10 lösen.

Des Weiteren sind an jedem Tragelement 36 vier Nivellierschrauben 64 angeordnet, über die die Drehachsen der Adaptervorrichtungen 44 exakt zu den Fahrzeugachsen 66 ausgerichtet werden können, um Spannungen im Fahrwerk zu vermeiden. Durch diese Nivellierschrauben 64 wird eine Tragplatte 67 des Tragelementes 36 unterhalb der Adaptervorrichtung 44 entsprechend an ihren Ecken angehoben oder abgelassen und so ausgerichtet, wodurch auch auftretender Verschleiß oder Fertigungs- und Montagetoleranzen ausgeglichen werden können.

Am hinteren Ende der Längsträger 12, 14 und somit an der zum vorderen Querträger 22 entgegengesetzten Seite des hinteren Querträgers 20 ist eine Gabelaufnahme 68 für ein Gabelfahrzeug 70 angeordnet. Diese weist zwei Hebeschienen 72 auf, unter die die Gabel des Gabelfahrzeugs 70 eingefahren werden kann. Die gesamte Gabelaufnahme 68 ist über eine Drehachse 74 mit den Längsträgern 12, 14 verbunden. Diese Drehachse 74 befindet sich im vom hinteren Querträger 20 entfernten Bereich 76 der Gabelaufnahme 68, so dass die Gabelaufnahme 68 relativ zu den Längsträgern 12, 14 um diese Drehachse 74 drehbar ist. Entsprechend werden, wenn die Gabel eines Gabelfahrzeugs 70 unter die Gabelaufnahme 68 geschoben wird, und anschließend die Gabel angehoben wird, die Längsträger 12, 14 über die Drehachse 74 im hinteren Bereich angehoben. Hierbei hält die Gabelaufnahme 68 etwa ihre horizontale Lage, während die Längsträger 12, 14 leicht gedreht werden. Um bei dieser Bewegung ein Drehen der Gabelaufnahme 68 von unten gegen einen Fahrzeugboden 78 zu verhindern, wird diese relative Drehung durch einen Anschlag 80 für die Gabelaufnahme 68 begrenzt, welcher in vorliegendem Ausführungsbeispiel an der Rückseite des hinteren Querträgers 20 ausgebildet ist. Entsprechend wird das Anheben des Fahrzeugträgers 10 mit dem darauf angeordneten Fahrzeug 48 eingeschränkt.

Die Rüstung des Fahrzeugs 48 für einen Prüfstand 82 erfolgt außerhalb des Prüfstandes 82, wie in Figur 4 dargestellt ist, indem zunächst das Fahrzeug 48 zu einer bekannten, fest installierten Hebebühne 84 an einem Vorrüstplatz gefahren wird und durch die Hebebühne 84 angehoben wird. Daraufhin können die Fahrzeugräder demontiert werden und das Fahrzeug so weit abgelassen werden, dass sich die Fahrzeugachsen 66 auf der gleichen Höhe befinden wie die Drehachsen der Adaptervorrichtungen 44. Durch Ein- und Ausfahren der teleskopartigen Längsträger 12, 14 und gleichzeitiges Verschwenken der Tragelemente 36 und damit der Adaptervorrichtungen 44 um das Parallelarmsystem 34 wird im Folgenden der Fahrzeugträger 10 bezüglich seiner Spurweite und seines Achsabstandes so zum Fahrzeug 48 ausgerichtet, dass die Drehachsen der Adaptervorrichtungen 44 auf den Fahrzeugachsen 66 angeordnet sind und die Adaptervorrichtungen 44 unmittelbar gegenüberliegend zu den Radnaben 46 platziert sind. Dabei wird durch das Parallelarmsystem 34 sichergestellt, dass in jeder Schwenkposition des Tragelementes 36 die Drehachse der Adaptervorrichtungen 44 senkrecht zu einer Ebene ausgerichtet sind, welche durch einen Vertikalschnitt entlang der Erstreckungsrichtung eines Längsträgers 12, 14 durch den Längsträger 12, 14 aufgespannt wird, wodurch die Drehachse der Adaptervorrichtungen 44 bei korrekter Anordnung des Fahrzeugs 48 zum Fahrzeugträger 10 immer parallel zur Fahrzeugachse 66 angeordnet ist.

Mittels der Nivellierschrauben 64 erfolgt die exakte Ausrichtung der Drehachsen der Adaptervorrichtungen 44 zu den Fahrzeugachsen 66. Daraufhin werden die Adaptervorrichtungen 44 mit den Radnaben 46 verbunden, wodurch das Fahrzeug 48 vollständig vom Fahrzeugträger 10 getragen wird und entsprechend die Hebebühne 84 abgelassen werden kann.

Im Folgenden kann das Gabelfahrzeug 70 mit seiner Gabel unter die Gabelaufnahme 68 gefahren werden und die Gabel geringfügig angehoben werden, nachdem über die Fixiervorrichtungen 62 die Adaptervorrichtungen 44 am Fahrzeugträger 10 vollständig befestigt wurden. Nun wird der Fahrzeugträger 10 mittels des Gabelfahrzeugs 70 in den Prüfstand 82, der in Figur 5 dargestellt ist, verfahren und mittels des Fahrzeugträgers 10 zu einer Antriebsachse 58 einer Lasteinrichtung 50 ausgerichtet. Daraufhin wird die Adaptervorrichtung 44 mit der Lasteinrichtung 50 verbunden. Die Fixiervorrichtungen 62 werden wieder gelöst, so dass eine gewisse Beweglichkeit der Adaptervorrichtungen 44 vorhanden bleibt. Im Folgenden können die Fahrwerktests durchgeführt werden, während das Fahrzeug 48 auf dem Fahrzeugträger 10 verbleibt. Nach Beendigung des Tests oder in einem auftretenden Notfall wird das Fahrzeug 48 wieder von der Lasteinrichtung 50 gelöst und mittels des Fahrzeugträgers 10 und des Gabelfahrzeugs 70 aus dem Prüfstand 82 entfernt. Die Abrüstung erfolgt im Wesentlichen wie die Rüstung des Fahrzeugs 48 jedoch in umgekehrter Reihenfolge.

Mit diesem Fahrzeugträger 10 können auch Fahrzeuge 48 mit besonders hohen Nabenhöhen problemlos getestet werden, da die Tragelemente 36 über das Parallelarmsystem 34 vom übrigen Fahrzeugträger 10 problemlos gelöst werden können und sodann durch Tragelemente 36 mit höherer Nabenhöhe, wie sie in Figur 3 dargestellt sind, ersetzt werden können.

Durch einen solchen Fahrzeugträger kann entsprechend die gesamte Vorrüstung des Fahrzeugs mit Ausnahme der Verbindung zur Lasteinrichtung außerhalb des Prüfstands vorgenommen werden und das Fahrzeug anschließend mittels des Fahrzeugträgers in den Prüfstand verschoben werden. Hieraus folgt eine bessere Auslastung der Prüfstände, da Auf- und Abrüstzeiten am Prüfstand auf ein Minimum verkürzt werden. Auch können beliebige Achs- und Spurweiten eingestellt werden.

Es sollte deutlich sein, dass die Erfindung nicht auf das beschriebene Ausführungsbeispiel begrenzt ist, sondern eine Vielzahl konstruktiver Änderungen des verfahrbaren Fahrzeugträgers möglich sind. So kann beispielsweise statt der Gabelaufnahme auch eine andere Krafteingriffsvorrichtung vorgesehen werden, wenn ein anderes Verschiebefahrzeug eingesetzt werden soll. Auch können die Querträger einstückig hergestellt werden beziehungsweise eine andere Teilung aufweisen.

## Patentansprüche

1. Fahrzeugträger (10) für einen Prüfstand (82) mit
zwei Längsträgern (12, 14),
einem vorderen Querträger (22) und einem hinteren Querträger (20), über die die beiden Längsträger (12, 14) miteinander verbunden sind, zwei Lagerabschnitten (26), die sich an den vom hinteren Querträger (20) abgewandten Seiten der Längsträger (12, 14) erstrecken,
zwei Lagerabschnitten (26), die sich an den vom vorderen Querträger (20) abgewandten Seiten der Längsträger (12, 14) erstrecken,
vier Tragelementen (36), die an den vier Lagerabschnitten (26) befestigt sind, wobei zumindest an den beiden Tragelementen (36), die an den vom vorderen Querträger (22) abgewandten Seiten der Längsträger (12, 14) angeordnet sind, Rollen (38) angeordnet sind,
wobei auf den Tragelementen (36) Adaptervorrichtungen (44) befestigt sind, an denen Radnaben (46) eines Fahrzeugs (48) befestigbar sind.

2. Fahrzeugträger (10) für einen Prüfstand (82) nach Anspruch 1,
**dadurch gekennzeichnet, dass**
die Tragelemente (36) mit den Adaptervorrichtungen (44) zu den Längsträgern (12, 14) verschwenkbar sind.

3. Fahrzeugträger (10) für einen Prüfstand (82) nach Anspruch 1 oder 2, **dadurch gekennzeichnet, dass**
die Tragelemente (36) mit den Adaptervorrichtungen (44) in einer Horizontalebene derart zu den Längsträgern (12, 14) verschwenkbar sind, dass eine Drehachse einer drehbaren Aufnahme (56) der Adaptervorrichtungen (44), die mit der Radnabe (46) des Fahrzeugs (48) und an der entgegengesetzten Seite mit einer Antriebsachse (58) der Lasteinrichtung (50) verbindbar ist, in jeder Schwenkposition senkrecht zu einer Vertikalebene durch den benachbarten Längsträger (12, 14) angeordnet ist.

4. Fahrzeugträger (10) für einen Prüfstand (82) nach Anspruch 3,
**dadurch gekennzeichnet, dass**
die Verschwenkung über ein Parallelarmsystem (34) erfolgt, über welches die Lagerabschnitte (26) mit den Tragelementen (36) verbunden sind.

5. Fahrzeugträger (10) für einen Prüfstand (82) nach Anspruch 4,
**dadurch gekennzeichnet, dass**
jedes Parallelarmsystem (34) aus zwei parallel zueinander ausgerichteten, gleich langen Schubstangen (32) besteht, wobei an den entgegengesetzten Enden der Schubstangen (32) jeweils ein Lagerauge (30) ausgebildet ist, mit dem die Schubstange (32) an ihrem einen Ende am Tragelement (36) gelagert ist und mit ihrem entgegengesetzten Ende am Lagerabschnitt (26) gelagert ist, wobei die Abstände und der Winkelversatz der Lageraugen (30) zu den Längsträgern (12, 14) am Tragelement (36) dem Winkelversatz und den Abständen der Lageraugen (30) zu den Längsträgern (12, 14) am Lagerabschnitt (26) entspricht.

6. Fahrzeugträger (10) für einen Prüfstand (82) nach einem der vorhergehenden Ansprüche,
**dadurch gekennzeichnet, dass**
die Adaptervorrichtungen (44) auf den Tragelementen (36) über Nivellierschrauben (64) zur Fahrzeugachse (66) ausrichtbar sind.

7. Fahrzeugträger (10) für einen Prüfstand (82) nach einem der vorhergehenden Ansprüche,
**dadurch gekennzeichnet, dass**
die Adaptervorrichtungen (44) auf den Tragelementen (36) begrenzt verschiebbar angeordnet sind und über eine Fixiervorrichtung arretierbar sind.

8. Fahrzeugträger (10) für einen Prüfstand (82) nach Anspruch 7,
**dadurch gekennzeichnet, dass**
die Begrenzung der Verschiebbarkeit durch Anschlagelemente (60) am Tragelement (36) gebildet ist, welche zumindest teilweise ein Dämpfungselement aufweisen.

9. Fahrzeugträger (10) für einen Prüfstand (82) nach Anspruch 7,
**dadurch gekennzeichnet, dass**
die Arretierung der Adaptervorrichtungen (44) auf den Tragelementen (36) durch Klemmen erfolgt.

10. Fahrzeugträger (10) für einen Prüfstand (82) nach einem der vorhergehenden Ansprüche,
**dadurch gekennzeichnet, dass**
die Adaptervorrichtungen (44) jeweils eine untere Lagerplatte (52) aufweisen, an der Kugelrollen befestigt sind, mit denen die Lagerplatte (52) auf dem jeweiligen Tragelement (36) aufliegt.

11. Fahrzeugträger (10) für einen Prüfstand (82) nach einem der vorhergehenden Ansprüche,
**dadurch gekennzeichnet, dass**
die Tragelemente (36) austauschbar sind.

12. Fahrzeugträger (10) für einen Prüfstand (82) nach einem der vorhergehenden Ansprüche,
**dadurch gekennzeichnet, dass**
der Abstand des vorderen Querträgers (22) mit den Tragelementen (36) zum hinteren Querträger (20) mit den Tragelementen (36) veränderbar ist.

13. Fahrzeugträger (10) für einen Prüfstand (82) nach einem der vorhergehenden Ansprüche,
**dadurch gekennzeichnet, dass**
die beiden Längsträger (12, 14) teleskopartig zwischen den beiden Querträgern (20, 22) ineinander und auseinander fahrbar sind.

14. Fahrzeugträger (10) für einen Prüfstand (82) nach einem der vorhergehenden Ansprüche,
**dadurch gekennzeichnet, dass**
an den Tragelementen (36) des hinteren Querträgers (20) Rollen (38) ausgebildet sind.

15. Verfahren zur Rüstung eines Prüfstandes (82) mit einem Fahrzeugträger (10) nach einem der Ansprüche 4 oder 5 oder einem der Ansprüche 6-14, sofern von Ansprüchen 4 oder 5 abhängig, bei dem
ein Fahrzeug (48) über eine fest installierte Hebebühne (84) angehoben wird,
der Fahrzeugträger (10) unter dem Fahrzeug (48) platziert wird,
der Fahrzeugträger (10) durch Drehen der Tragelemente (36) über das Parallelarmsystem (34) bezüglich seiner Spurweite und durch Veränderung des Abstands des vorderen Querträgers (22) mit den Tragelementen (36) zum hinteren Querträger (20) mit den Tragelementen (36) bezüglich seines Achsabstandes eingestellt wird, die Adaptervorrichtungen (44) an den Radnaben (46) des Fahrzeugs (48) montiert werden,
das Fahrzeug (48) über die Hebebühne (84) vollständig heruntergelassen wird,
der Fahrzeugträger (10) mit dem Fahrzeug (48) über ein Gabelfahrzeug (70) zum Prüfstand (82) gefahren wird,
die Adaptervorrichtungen (44) am Prüfstand (82) mit einer Lasteinrichtung (50) zur Prüfung verbunden werden.

## Claims

1. Vehicle carrier (10) for a test stand (82), having two longitudinal members (12, 14), a front cross member (22) and a rear cross member (20), via which the two longitudinal members (12, 14) are connected to one another, two bearing sections (26) which extend on the sides of the longitudinal members (12, 14) facing away from the rear cross member (20), two bearing sections (26) which extend on the sides of the longitudinal members (12, 14) facing away from the front cross member (20), four supporting elements (36) which are fastened to the four bearing sections (26), wherein rollers (38) are arranged at least on the two support elements (36) which are arranged on the sides of the longitudinal members (12, 14) facing away from the front cross member (22), adapter devices (44) being fastened on the support elements (36), to which adapter devices wheel hubs (46) of a vehicle (48) can be fastened.

2. Vehicle carrier (10) for a test stand (82) according to claim 1, **characterized in that** the support elements (36) can be pivoted with the adapter devices (44) to the longitudinal beams (12, 14).

3. Vehicle carrier (10) for a test stand (82) according to claim 1 or 2, **characterized in that** the support elements (36) with the adapter devices (44) can be pivoted in a horizontal plane relative to the longitudinal members (12, 14) in such a way that an axis of rotation of a rotatable receptacle (56) of the adapter devices (44), which can be connected to the wheel hub (46) of the vehicle (48) and on the opposite side to a drive axle (58) of the load device (50), is arranged perpendicular to a vertical plane through the adjacent longitudinal member (12, 14) in each pivot position.

4. Vehicle carrier (10) for a test stand (82) according to claim 3, **characterized in that** the pivoting takes place via a parallel arm system (34), via which the bearing sections (26) are connected to the support elements (36).

5. Vehicle carrier (10) for a test stand (82) according to claim 4, **characterized in that** each parallel arm system (34) consists of two push rods (32) of equal length aligned parallel to one another, a bearing eye (30) being formed at each of the opposite ends of the push rods (32), by means of which the push rod (32) is mounted at its one end on the support element (36) and is mounted at its opposite end on the bearing section (26), the distances and the angular offset of the bearing eyes (30) from the longitudinal beams (12, 14) on the support element (36) corresponding to the angular offset and the distances of the bearing eyes (30) from the longitudinal beams (12, 14) on the bearing section (26).

6. Vehicle carrier (10) for a test stand (82) according to one of the preceding claims, **characterized in that** the adapter devices (44) on the support elements (36) can be aligned with the vehicle axle (66) via levelling screws (64).

7. Vehicle carrier (10) for a test stand (82) according to one of the preceding claims, **characterized in that** the adapter devices (44) are arranged on the support elements (36) so as to be displaceable to a limited extent and can be locked by means of a fixing device.

8. Vehicle carrier (10) for a test stand (82) according to claim 7, **characterized in that** the limitation of the displaceability is formed by stop elements (60) on the support element (36), which at least partially have a damping element.

9. Vehicle carrier (10) for a test stand (82) according to claim 7, **characterized in that** the locking of the adapter devices (44) on the support elements (36) is effected by clamping.

10. Vehicle carrier (10) for a test stand (82) according to one of the preceding claims, **characterized in that** the adapter devices (44) each have a lower bearing plate (52), to which ball rollers are fastened, with which the bearing plate (52) rests on the respective support element (36).

11. Vehicle carrier (10) for a test stand (82) according to one of the preceding claims, **characterized in that** the support elements (36) are interchangeable.

12. Vehicle carrier (10) for a test stand (82) according to one of the preceding claims, **characterized in that** the distance between the front cross member (22) with the support elements (36) and the rear cross member (20) with the support elements (36) can be varied.

13. Vehicle carrier (10) for a test stand (82) according to one of the preceding claims, **characterized in that** the two longitudinal beams (12, 14) can be moved telescopically into one another and apart between the two cross beams (20, 22).

14. Vehicle carrier (10) for a test stand (82) according to one of the preceding claims, **characterized in that** rollers (38) are formed on the supporting elements (36) of the rear cross member (20).

15. Method for setting up a test stand (82) with a vehicle carrier (10) according to one of the claims 4 or 5 or one of the claims 6-14, if dependent on one of the claims 4 or 5, in which a vehicle (48) is lifted via a firmly installed lifting platform (84), the vehicle carrier (10) is placed under the vehicle (48), the vehicle carrier (10) is adjusted with respect to its track width by rotating the support elements (36) via the parallel arm system (34) and by changing the distance between the front cross member (22) with the support elements (36) and the rear cross member (20) with the support elements (36) with respect to its center distance, the adapter devices (44) are mounted on the wheel hubs (46) of the vehicle (48), the vehicle (48) is lowered completely via the lifting platform (84), the vehicle carrier (10) with the vehicle (48) is driven to the test stand (82) via a forked vehicle (70), the adapter devices (44) are connected to a load device (50) on the test stand (82) for testing.

## Revendications

1. Support de véhicule (10) pour un banc d'essai (82) comprenant deux longerons (12, 14), une traverse avant (22) et une traverse arrière (20) par lesquelles les deux longerons (12, 14) sont reliés l'un à l'autre, deux sections de palier (26) qui s'étendent sur les côtés des longerons (12, 14) opposés à la traverse arrière (20), deux sections de palier (26) qui s'étendent sur les côtés des longerons (12, 14) opposés à la traverse avant (20), 14), quatre éléments de support (36) qui sont fixés aux quatre sections de palier (26), dans lequel des galets (38) sont disposés au moins sur les deux éléments de support (36) qui sont disposés sur les côtés des longerons (12, 14) opposés à la traverse avant (22), des dispositifs adaptateurs (44) étant fixés sur les éléments de support (36), sur lesquels des moyeux de roue (46) d'un véhicule (48) peuvent être fixés.

2. Support de véhicule (10) pour un banc d'essai (82) selon la revendication 1, **caractérisé en ce que** les éléments porteurs (36) peuvent pivoter avec les dispositifs adaptateurs (44) par rapport aux longerons (12, 14).

3. Support de véhicule (10) pour un banc d'essai (82) selon la revendication 1 ou 2, **caractérisé en ce que** les éléments porteurs (36) avec les dispositifs adaptateurs (44) peuvent pivoter dans un plan horizontal par rapport aux longerons (12, 14) de telle sorte qu'un axe de rotation d'un logement rotatif (56) des dispositifs adaptateurs (44), qui peut être relié au moyeu de roue (46) du véhicule (48) et, sur le côté opposé, à un axe d'entraînement (58) du dispositif de charge (50), est disposé, dans chaque position de pivotement, perpendiculairement à un plan vertical passant par le longeron adjacent (12, 14).

4. Support de véhicule (10) pour un banc d'essai (82) selon la revendication 3, **caractérisé en ce que** le pivotement s'effectue par l'intermédiaire d'un système de bras parallèles (34), par lequel les sections de palier (26) sont reliées aux éléments porteurs (36).

5. Support de véhicule (10) pour un banc d'essai (82) selon la revendication 4, **caractérisé en ce que** chaque système de bras parallèles (34) est constitué de deux tiges de poussée (32) de même longueur, orientées parallèlement l'une à l'autre, un oeillet de palier (30) étant formé à chacune des extrémités opposées des tiges de poussée (32), par lequel la tige de poussée (32) est montée à l'une de ses extrémités sur l'élément porteur (36) et est montée par son extrémité opposée sur la section de palier (26), les distances et le décalage angulaire des oeillets de palier (30) par rapport aux longerons (12, 14) sur l'élément porteur (36) correspondant au décalage angulaire et aux distances des oeillets de palier (30) par rapport aux longerons (12, 14) sur la section de palier (26).

6. Support de véhicule (10) pour un banc d'essai (82) selon l'une des revendications précédentes, **caractérisé en ce que** les dispositifs d'adaptation (44) peuvent être alignés sur les éléments de support (36) par rapport à l'axe du véhicule (66) par l'intermédiaire de vis de nivellement (64).

7. Support de véhicule (10) pour un banc d'essai (82) selon l'une des revendications précédentes, **caractérisé en ce que** les dispositifs d'adaptation (44) sont disposés de manière à pouvoir se déplacer de manière limitée sur les éléments de support (36) et peuvent être bloqués par un dispositif de fixation.

8. Support de véhicule (10) pour un banc d'essai (82) selon la revendication 7, **caractérisé en ce que** la limitation de la capacité de déplacement est formée par des éléments de butée (60) sur l'élément porteur (36), qui présentent au moins partiellement un élément d'amortissement.

9. Support de véhicule (10) pour un banc d'essai (82) selon la revendication 7, **caractérisé en ce que** le blocage des dispositifs d'adaptation (44) sur les éléments de support (36) est réalisé par serrage.

10. Support de véhicule (10) pour un banc d'essai (82) selon l'une des revendications précédentes, **caractérisé en ce que** les dispositifs d'adaptation (44) présentent chacun une plaque d'appui inférieure (52) sur laquelle sont fixés des galets à billes par lesquels la plaque d'appui (52) repose sur l'élément porteur (36) correspondant.

11. Support de véhicule (10) pour un banc d'essai (82) selon l'une des revendications précédentes, **caractérisé en ce que** les éléments de support (36) sont interchangeables.

12. Support de véhicule (10) pour un banc d'essai (82) selon l'une des revendications précédentes, **caractérisé en ce que** la distance entre la traverse avant (22) avec les éléments porteurs (36) et la traverse arrière (20) avec les éléments porteurs (36) peut être modifiée.

13. Support de véhicule (10) pour un banc d'essai (82) selon l'une des revendications précédentes, **caractérisé en ce que** les deux longerons (12, 14) sont télescopiques entre les deux traverses (20, 22) et peuvent s'emboîter et s'écarter l'un de l'autre.

14. Support de véhicule (10) pour un banc d'essai (82) selon l'une des revendications précédentes, **caractérisé en ce que** des galets (38) sont formés sur les éléments porteurs (36) de la traverse arrière (20).

15. Procédé d'équipement d'un banc d'essai (82) avec un support de véhicule (10) selon l'une des revendications 4 ou 5 ou l'une des revendications 6 à 14, dans la mesure où elles dépendent des revendications 4 ou 5, dans lequel un véhicule (48) est soulevé par un pont élévateur (84) installé à demeure, le support de véhicule (10) est placé sous le véhicule (48), le porte-véhicule (10) est réglé par rapport à son écartement en faisant tourner les éléments de support (36) par l'intermédiaire du système de bras parallèles (34) et en modifiant la distance entre la traverse avant (22) avec les éléments de support (36) et la traverse arrière (20) avec les éléments de support (36) par rapport à son entraxe, les dispositifs adaptateurs (44) sont montés sur les moyeux de roue (46) du véhicule (48), le véhicule (48) est abaissé complètement par le pont élévateur (84), le support de véhicule (10) avec le véhicule (48) est amené au banc d'essai (82) par un véhicule à fourche (70), les dispositifs adaptateurs (44) sont reliés au banc d'essai (82) à un dispositif de charge (50) pour le contrôle.
